# EUROPEAN PATENT APPLICATION

(11) **EP 1 843 151 A1**
(43) Date of publication of application: **10.10.2007**
(21) Application number: 06712198.8
(22) Date of filing: 23.01.2006
(51) Int. Cl.: G01N 27/327, G01N 27/28

(54) **SENSOR CHIP MANUFACTURING METHOD AND SENSOR CHIP**

(30) Priority: 24.01.2005 JP 2005015994
(71) Applicant: Sumitomo Electric Industries, Ltd., Osaka-shi, Osaka 541-0041 (JP); National Institute of Advanced Industrial Science and Technology, Tokyo 100-8921 (JP)
(72) Inventor: KAIMORI, Shingo, c/o Sumitomo Electric Ind. Ltd., Osaka-shi, Osaka 5540024 (JP); HOSOYA, Toshifumi, c/o Sumitomo Electric Ind. Ltd., Osakashi, Osaka 5540024 (JP); ICHINO, Moriyasu, c/o Sumitomo Electric Ind. Ltd., Osaka-shi, Osaka 5540024 (JP); NAKAMURA, Hideaki, c/o National Institute, Tsukuba-shi (JP); GOTOH, Masao, c/o National Institute, Tsukuba-shi, Ibara (JP); KURUSU, Fumiyo, c/o National Institute, Tsukuba-shi, Ibara (JP); ISHIKAWA, Tomoko, c/o National Institute, Tsukuba-shi, Ibara (JP); KARUBE, Isao, c/o National Institute, Tsukuba-shi, Ibara (JP)
(74) Representative: Cross, Rupert Edward Blount
(86) International application number: PCT/JP2006/300982
(87) International publication number: WO 2006/078022

(57) **Abstract**

A method for fabricating a sensor chip having a substrate, a cover layer, a spacer layer interposed between the substrate and the cover layer, and a hollow reaction section provided in the spacer layer, the method comprising the steps of: affixing two or more adhesive or bonding tapes onto a sheet where a plurality of substrates are to be formed or onto a plurality of substrates, to thus form a spacer layer; and forming a hollow reaction section from one or a plurality of gaps between the tapes, whereby volumetric variations or positional displacements of the hollow reaction section can be reduced. A sensor chip which can be fabricated by this method.

## Description

### Technical Field

The present invention relates to a method for fabricating a sensor chip capable of readily detecting, in a quantitative manner, chemical substances contained in a sample, and more particularly to a method for fabricating a biosensor chip. The present invention also relates to a sensor chip which can be manufactured by means of this sensor chip fabrication method.

### Background

The biosensor chip is a sensor chip which introduces a trace amount of sample into a reaction section of the chip; subjects the trace amount of sample to a biochemical reaction such as an enzyme reaction, an antigen-antibody reaction, or the like in the chip; and outputs, to the outside of the chip, information acquired through the biochemical reaction. For instance, the sensor chip is used as a blood glucose level sensor for measuring the amount of glucose in blood (a blood glucose level) or as a urine sugar level sensor for measuring a urine sugar level in the field of a home medical checkup (self-care) for self-administration and prevention of diabetes, and the like.

JP-A-2001-159618 describes an example of such a biosensor chip. This biosensor chip (claim 1) has a cavity (a hollow reaction section) into which a liquid sample is introduced by means of the capillary phenomenon, and analyzes components in the liquid sample through a reaction between the thus-introduced liquid sample and a reagent. In addition to having the hollow reaction section, the biosensor chip has an electrode system (detection means) consisting of a working electrode and a counter electrode, a lead (an output terminal) for outputting a detected signal to the outside, and a sample inlet.

When such a sensor chip is manufactured one piece from another (on a per-piece basis), productivity is deteriorated, and a distance between a substrate and a cover layer, the size of a hollow reaction section, and like dimensions become susceptible to variations on a per-sensor-chip basis, which in turn is likely to raise a problem of variations in a measured value. Accordingly, there has been adopted, as a preferable method, a method of manufacturing pieces of a raw material (elements) of a plurality of sensor chips arranged in parallel or joined together, to thus collectively manufacture a plurality of detection means, hollow reaction sections, and the like; and cutting the thus-manufactured joined sensor chips through slicing or the like, thereby acquiring pieces of sensor chips.

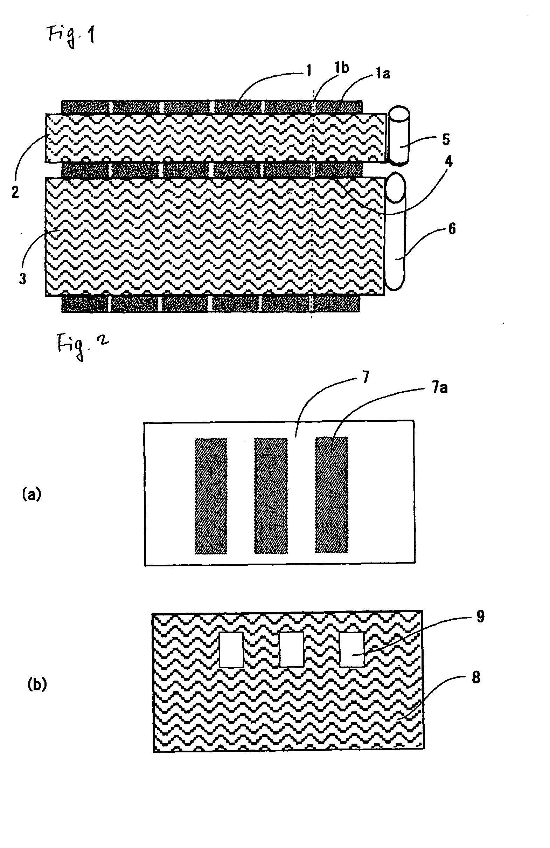

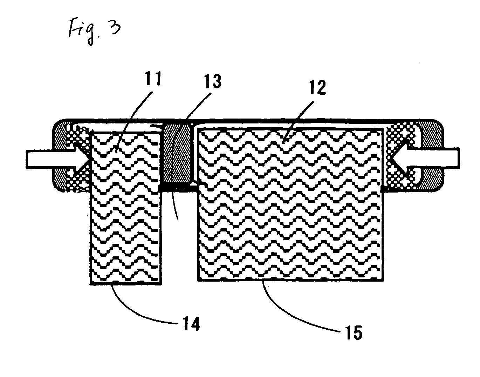

For instance, as shown in Fig. 2, a method for collectively forming the hollow reaction sections and the like includes a method for placing, over a sheet into which a plurality of substrates are to be formed, a double-faced bonding (adhesive) sheet (a spacer layer) in which a plurality of hollow sections or grooves to be formed into hollow reaction sections are located at positions corresponding to the substrates; and the method is generally carried out. The hollow reaction sections formed in such a way are required to have a feature of small volumetric variations in sensor chips and small positional displacements from a predetermined location. Moreover, in order to enable detection of a small quantity of sample, the hollow reaction sections are also required to have a feature of small thickness and volume (small volume) of a spacer layer.
Patent Document 1: JP-A-2001-159618 (Claim 1)

### Disclosure of the Invention

### Problem that the present invention is to solve

A challenge to be met by the present invention is to provide a method for fabricating a sensor chip which enables a reduction in volumetric variations or positional displacements of hollow reaction sections when compared with a related-art method for placing the double-sided bonding (adhesive) sheet; particularly, a method for fabricating a sensor chip whose volumetric variations and positional displacements are small even when each of hollow reaction sections has a small volume, as well as a sensor chip which can be manufactured under this method.

### Means for Solving the Problem

By means of a result of rigorous study, the present inventor has found that the problem is solved by a method for affixing two or more adhesive or bonding tapes onto a sheet where a plurality of substrates are to be formed or onto a plurality of substrates in such a way that a gap exists between the tapes, to thus form hollow reaction sections from the gap between the tapes; and has completed the present invention.

Specifically, the present invention provides, in claim 1, a method for fabricating a sensor chip having a substrate, a cover layer, a spacer layer interposed between the substrate and the cover layer, and a hollow reaction section provided in the spacer layer, the method comprising the steps of:
affixing two or more adhesive or bonding tapes onto a sheet where a plurality of substrates are to be formed or onto a plurality of substrates, to thus form a spacer layer; and
forming a hollow reaction section from one or a plurality of gaps between the tapes.

This method is characterized by affixing two or more adhesive or bonding tapes onto a sheet where a plurality of substrates are to be formed or onto a plurality of substrates. An object to which the tapes are to be affixed may be a sheet which is processed into substrates for individual sensor chips by being sliced into pieces, or may be a plurality of arranged substrates of individual sensor chips. In terms of productivity, a sheet where a plurality of substrates are to be formed is preferably used.

The two or more adhesive or bonding tapes are affixed with a gap therebetween. Hollow reaction sections are formed from this gap between the tapes, and side surfaces of the respective tapes serve as side walls of the hollow reaction sections, and the respective tapes form so-called spacer layers. When the number of tapes is three or more, a plurality of gaps are formed, and a plurality of hollow reaction sections may also be formed from these gaps.

Specifically, the present invention lies in that the side walls of the hollow reaction sections are formed not from a conventionally-used sheet but from two tapes. By means of adoption of this method, volumetric variations or positional displacements of the hollow reaction sections can be reduced as compared with the conventional method for covering the substrate with a sheet. Particularly, when the volume of the hollow reaction section is small, this effect is remarkable. Moreover, positional adjustment of the sidewalls of the hollow reaction sections, which is required to acquire hollow reaction sections of predetermined size, is easy.

Two or more adhesive or bonding tapes are affixed in parallel to each other, and a gap between the tapes assumes a given width, whereby the hollow reaction sections can be preferably formed into a given size. Claim 2 is directed toward the method for manufacturing a sensor chip and corresponds to a preferable mode.

A method for affixing tapes stretched at tension to a substrate from above and below is also mentioned as the method for affixing tapes to a substrate. In such a case, the method for concurrently affixing two or more tapes preferably enhances productivity or renders a gap between the tapes stable. Claim 3 corresponds to this preferable mode.

A method for sequentially affixing two or more tapes from edges thereof onto a sheet where a plurality of substrates are to be formed or onto a plurality of substrates is also mentioned as the method for affixing tapes to a substrate. According to this method, slack is less likely to arise in tapes as compared with the method for affixing the suspended tapes at tension to the substrate from above and below. From this viewpoint, this method is preferable. Claim 4 corresponds to this preferable mode.

Particularly, according to a method for affixing tapes from edges thereof, by use of a jig of a structure of affixing the two or more tapes with a gap between the tapes being maintained uniformly, while the tapes are supplied from the jig, variations in the widths of the respective tapes are absorbed, and a gap between the tapes can be maintained uniformly, and hence volumetric variations are small. Alternatively, slack is less likely to arise as compared with a case where tensioned tapes are affixed, and there is yielded an effect of displacements in an affixing position being less likely to arise.

Claim 5 corresponds to this preferable mode, and provides a method for fabricating a sensor chip characterized in that tapes are affixed by use of a jig of a structure of affixing the two or more tapes with a gap between the tapes being maintained uniformly.

In order to enable detection of a small amount of sample, a smaller thickness of a hollow reaction section of a sensor chip is preferable. Accordingly, a thinner material used for forming a spacer layer including the hollow reaction section; namely, a thinner double-sided adhesive (bonding) sheet or tape, is preferable. However, in the case of a method of conventional technique for covering the substrate with a double-sided adhesive (bonding) sheet, slack in a thin sheet poses a problem. Accordingly, the thickness of a normally-used sheet is 250 µm or thereabouts, and handling of a thin sheet having a thickness of 150 µm is considered difficult.

In the case of a method for affixing tapes, the problem of slack in tapes less frequently arises as compared with the case where the sheet is used. Especially, when tapes are affixed by use of the jig, a problem of slack is less likely to arise even in the case of a thin tape. Accordingly, use of a thin tape enables easy formation of hollow reaction sections of small volume. Therefore, according to the present invention, the thickness of the tape is set to 150 µm or less, whereby a sensor chip capable of detecting a small quantity of sample can be fabricated. Particularly, as a result of the thickness of the tape being set to 100 µm or less, a superior sensor chip can be manufactured.

Claim 6 corresponds to this preferable mode, and provides a method of fabricating a sensor chip characterized in that the thickness of the tape is 150 µm or less.

According to a method for fabricating a sensor chip of the present invention, by use of a single sheet, which forms substrate as an object to which a plurality of tapes are affixed and also forms a cover layer, the tapes are affixed to areas of the sheet where substrates are to be formed. Other elements of sensor chips, such as detection means, are formed on the areas. Subsequently, if necessary, the tapes are also affixed to a side of the sheet where the cover layer is to be formed, and the elements of the sensor chips are also formed on the side. This sheet is folded into two along a boundary between a side where the substrates are to be formed and a side where a cover layer is formed; namely, a folding line which essentially bisects the sheet, and the cover layer side is affixed to the tapes. According to this method, affixing the substrate and the cover layer can be preferably performed with superior positional accuracy. Claim 7 corresponds to this preferable mode.

Folding the sheet into two along the folding line includes a method for folding the sheet into two at the position of the folding line and another folding method for folding the sheet so as to assume a C-shaped cross-sectional profile at the positions of two straight lines which are parallel to and equidistant from the folding line.

In addition to the method for fabricating a sensor chip, the present invention provides a sensor chip (claim 8) which can be fabricated by means of the fabrication method and which comprises a substrate; a cover layer; a spacer layer provided between the substrate and the cover layer; and a hollow reaction section provided in the spacer layer, wherein the spacer layer and the hollow reaction section are formed from two or more adhesive or bonding tapes. The sensor chip of the present invention is preferably used particularly as a biosensor chip.

Claim 9 provides a sensor chip featuring this biosensor chip. The biosensor chip of the present invention can be used as a blood glucose level sensor for measuring the amount of glucose in blood (a blood glucose level) or as a urine sugar level sensor for measuring a urine sugar level in the field of a home medical checkup (self-care) for self-administration and prevention of diabetes, and the like.

### Advantage of the Present Invention

According to the method for fabricating a sensor chip of the present invention, volumetric variations and positional displacements in hollow reaction sections can be reduced. The conventional method for covering a substrate with a double-sided adhesive (bonding) sheet encounters difficulty in reducing volumetric variations and positional displacements. Particularly, when the hollow reaction sections have a small volume, this problem is noticeable. However, according to the present invention, even in the case of hollow reaction sections of small volume, the hollow reaction sections can be formed readily with involvement of small volumetric variations and positional displacements. The sensor chip of the present invention which can be fabricated by means of this method can be used preferably as a biosensor chip, such as a blood glucose level sensor or the like, and used for home medical checkup (self-care) or the like.

### Brief Description of the Drawings

[Fig. 1] A descriptive plan view showing a method for fabricating a sensor chip of the present invention.
[Fig. 2] A descriptive plan view showing a method for fabricating a sensor chip of the related art.
[Fig. 3] is a conceptual rendering showing a jig used in the method for fabricating the sensor chip of the present invention.

### Best Mode for Implementing the Present Invention

The best mode for implementing the present invention will now be described. The present invention is not limited to this embodiment, and the embodiment can be altered to another embodiment, so long as the gist of the present invention is not impaired.

A film of insulative material is selected as a material of a substrate and a cover layer, which form the sensor chip of the present invention. Insulative materials which can be mentioned include ceramics; glass; paper; biodegradable material (e.g., polylactide-microbial-produced polyester or the like); a thermoplastic resin such as polyvinylchloride, polypropylene, polystyrene, polycarbonate, an acrylic resin, polybutylene terephthalate, polyethylene terephthalate (PET) or the like; a thermosetting resin such as an epoxy resin or the like; and a plastic material such as a UV setting resin or the like. A plastic material, such as a polyethylene terephthalate or the like, is preferable in terms of mechanical strength, flexibility, and ease of manufacture and processing of a chip; particularly, ease of folding of a chip into two.

A preferable range of the thickness of a substrate and that of a cover layer varies according to an application of a sensor chip, or the like, and no particular limitations are imposed thereon. In the case of a biosensor chip such as a blood glucose level sensor or the like, a range from 100 µm to 300 µm or thereabouts is desirable.

Hollow reaction sections (formed by two or more pieces of tape) of the sensor chip of the present invention serve as areas where a sample is introduced when the sensor chip is in use and where the introduced sample is subjected to chemical reaction. In the case of a biosensor chip or the like, an agent used for inducing chemical reaction of a catalyst, an enzyme, and the like, is fixed in the hollow reaction sections. Chemical reaction of the sample is accelerated by the agent.

For instance, in the case of a glucose biosensor chip used for measuring the amount of glucose in blood, a glucose oxidase layer, a glucose oxidase-electron acceptor (mediator) mixture layer, a glucose oxidase-albumin mixture layer, a glucose oxidase-electron acceptor-albumin mixture layer, or the like, is formed in the hollow reaction sections.

A sample to be measured; for instance, blood, urine, or an aqueous sample sampled from a production line, is introduced into the hollow reaction sections from the sample inlet. The sample inlet may be formed in the substrate or the cover layer, but may also be formed in at least one side surface of the sensor chip. The sample inlet may also be provided in numbers. For instance, the sample inlet may be formed in both sides of a sensor chip, and a straw-shaped structure which interconnects the two sides is preferable for the hollow reaction section, in view that such a structure facilitates introduction of a sample.

Detection means is provided in the hollow reaction sections. Here, the detection means is formed from at least two or more electrodes. Although these electrodes are usually called a working electrode and a counter electrode, the detection means may have another electrode, such as a reference electrode or the like, or another means. The electrodes operate so as to apply a predetermined voltage to the hollow reaction sections, for measuring electric currents generated by a reaction, and the like. In accordance with the signals from the electrodes, a chemical substance in the sample is detected and quantified. The electrodes include carbon electrodes, or the like, and can be formed by means of screen printing of electrodes on a substrate or the like.

Although the electrodes are exposed in the hollow reaction sections, output terminals (lead wires) of the electrodes are formed in the substrate, the spacer layer, or the cover layer, or therebtetween, so that electrical conduction can be established with the outside of the sensor chip. Application of a predetermined voltage, measurement of an electric current, and the like, is performed by way of the output terminals.

Application of an agent may be performed prior to or after adhesion of a tape. However, in view of ease of operation for applying an agent or ease of positioning of application of an agent, an agent is preferably applied after adhesion of a tape.

A tape used in the fabrication method of the present invention includes adhesive tapes using, as an adhesive layer, a rubber-based adhesive using natural rubber, SBR, block SIS, or the like; an acrylic adhesive using acrylic ester copolymer, or the like; or a silicone-based adhesive using silicone rubber, or the like. So long as the thickness of the adhesive layer at which desired adhesive force can be achieved can be ensured, double-sided tape including paper; a nonwoven fabric such as PP, PE, polyester, polyamide or the like; or a film such as polyester or the like, serving as an intermediate support layer for enhancing ease of handling, is desirable. Although no specific limitations are imposed on the thickness of the tape, a smaller thickness, such as a thickness of 100 µm or less, as mentioned above is desirable with a view toward acquiring hollow reaction sections of small volume.

The present invention will now be described by reference to the drawings.

Fig. 1 is a descriptive plan view showing the fabrication method of the present invention. In this embodiment, two tapes 2 and 3 are affixed to a single sheet 1, in which a plurality of substrates 1a are to be formed, while a gap 4 of given width is formed between the tapes. Each of the substrates 1a is rectangular, and the substrates are arranged such that longer sides of the substrates are interconnected or such that shorter sides of the substrates are essentially aligned into a line.

The two tapes 2 and 3 are taken up respectively by reels 5 and 6 and sequentially affixed to the parallel-connected substrates 1 from edges of the respective tapes. A No. 5606 manufactured by Nitto Denko Corporation (a core PET has a thickness of 12 µm, and the tape including a double-sided adhesive layer has a thickness of 60 µm) or the like can be used as this tape.

After adhesion of the tapes 2 and 3, a cover layer (not shown) is pasted onto the tapes, and the gap 4 acts as a hollow section between the substrate 1 and the cover layer. This hollow section forms hollow reaction sections of sensor chips. In this example, detection means, output terminals, and the like (not shown) are formed on the substrate 1 before adhesion of the tapes 2 and 3. After adhesion of the cover layer, the sheet 1 is sliced along a cutting-plane line 1b. Concurrently, the tapes 2 and 3 are also sliced at the same position, whereby single pieces of sensor chips are obtained.

Fig. 2 is a descriptive plan view showing a substrate 7 (Fig. 2a) in which are formed a plurality of substrates and a double-sided adhesive sheet 8 (Fig. 2b), both of which are used in the method for covering the substrate with a double-sided adhesive sheet. In the substrate sheet 7, reference numeral 7a designates areas where the substrates are to be formed. The areas are rectangular and arranged such that adjacent longer sides of the areas oppose each other. The substrate sheet 7 is covered with the double-sided adhesive sheet 8 having hollow sections 9. Subsequently, the cover layer (not shown) is affixed onto the double-sided sheet, and the hollow sections 9 located between the substrate sheet 7 and the cover layer form hollow reaction sections of sensor chips. Thereafter, the substrate sheet 7 and the double-sided adhesive sheet 8 are sliced, whereby pieces of sensor chips are acquired.

Fig. 3 is a conceptual rendering showing a jig of a structure where two tapes which can be used in the present invention are affixed while a uniform gap is maintained between the tapes. Two tapes 11 and 12 are wrapped around a reel (not shown), and can be sequentially affixed from tape edges 14 and 15 while a given gap 13 is maintained.

## Claims

1. A method for fabricating a sensor chip having a substrate, a cover layer, a spacer layer interposed between the substrate and the cover layer, and a hollow reaction section provided in the spacer layer, the method comprising the steps of:
affixing two or more adhesive or bonding tapes onto a sheet where a plurality of substrates are to be formed or onto a plurality of substrates, to thus form a spacer layer; and
forming a hollow reaction section from one or a plurality of gaps between the tapes.

2. The method for fabricating a sensor chip according to claim 1, wherein the two or more adhesive or bonding tapes are affixed in parallel to each other, and a gap between the tapes has a given width.

3. The method for fabricating a sensor chip according to claim 1 or 2, wherein two or more tapes are concurrently affixed onto a sheet where a plurality of substrates are to be formed or onto a plurality of substrates.

4. The method for fabricating a sensor chip according to any one of claims 1 through 3, wherein two or more tapes are affixed sequentially from edges thereof onto a sheet where a plurality of substrates are to be formed or onto a plurality of substrates.

5. The method for fabricating a sensor chip according to claim 4, wherein the tapes are affixed by use of a jig having a structure of affixing the two or more tapes while a uniform gap is maintained between the tapes .

6. The method for fabricating a sensor chip according to any one of claims 1 through 5, wherein the thickness of the tape is 150 µm or less.

7. The method for fabricating a sensor chip according to any one of claims 1 through 6, further comprising the steps of:
affixing two or more adhesive or bonding tapes onto a single sheet forming a substrate and a cover layer, to thus form a spacer layer; and
folding the sheet into two along a folding line which essentially bisects the sheet, to thus laminate the spacer layers.

8. A sensor chip comprising:
a substrate;
a cover layer;
a spacer layer provided between the substrate and the cover layer; and
a hollow reaction section provided in the spacer layer,
wherein the spacer layer and the hollow reaction section are formed from two or more adhesive or bonding tapes.

9. The sensor chip defined in claim 8, serving as a biosensor chip.
